# EUROPEAN PATENT APPLICATION

(11) **EP 4 614 083 A1**
(43) Date of publication of application: **10.09.2025**
(21) Application number: 23884392.4
(22) Date of filing: 21.08.2023
(51) Int. Cl.: F24F 13/02, F24F 1/06, B23K 1/00

(54) **PIPELINE INTEGRATION MODULE, AIR CONDITIONER OUTDOOR UNIT, AND METHOD FOR PREPARING PIPELINE INTEGRATION MODULE**

(30) Priority: 31.10.2022 CN 202211348332
(71) Applicant: GD Midea Heating & Ventilating Equipment Co., Ltd., Foshan, Guangdong 528000 (CN); Midea Group Co., Ltd., Foshan, Guangdong 528311 (CN)
(72) Inventor: WANG, Xinbao, Foshan, Guangdong 528000 (CN); WU, Yandong, Foshan, Guangdong 528000 (CN); SU, Ruier, Foshan, Guangdong 528000 (CN); LI, Dongpo, Foshan, Guangdong 528000 (CN)
(74) Representative: Ran, Handong
(86) International application number: PCT/CN2023/114084
(87) International publication number: WO 2024/093455

(57) **Abstract**

Provided are a pipeline integration module, an air conditioner outdoor unit, and a method for preparing a pipeline integration module. The pipeline integration module includes a first plate-like component, a second plate-like component, and a sandwich layer. The first plate-like component has a first groove. The first groove has a first stamped chamfer at an opening of the first groove. The second plate-like component has a second groove. The second groove has a second stamped chamfer at an opening of the second groove. The first plate-like component and the second plate-like component cover each other. The second groove and the first groove correspond to each other and together enclose a cavity. The cavity has a gap between the first stamped chamfer and the second stamped chamfer. The sandwich layer is disposed between the first plate-like component and the second plate-like component and connected to the first plate-like component and the second plate-like component. The sandwich layer has an end portion facing towards the cavity. The end portion is located within the gap. The pipeline integration module according to the present disclosure can improve filling of the gap between the first stamped chamfer and the second stamped chamfer.

## Description

### CROSS-REFERENCE TO RELATED APPLICATION

The present application claims priority to Chinese patent disclosure No. 202211348332.X, titled "PIPELINE INTEGRATION MODULE, AIR CONDITIONER OUTDOOR UNIT, AND METHOD FOR PREPARING PIPELINE INTEGRATION MODULE", and filed on October 31, 2022, the entire disclosure of which is incorporated herein by reference.

### FIELD

The present disclosure belongs to the field of refrigeration equipment technologies, and specifically relates to a pipeline integration module, an air conditioner outdoor unit, and a method for preparing a pipeline integration module.

### BACKGROUND

This section provides only background information related to the present disclosure, which is not necessarily the related art.

A pipeline of the air conditioner outdoor unit is complex, and the pipeline needs to be integrated. A pipeline integration module in the related art includes two plate bodies. Each of the two plate bodies has a groove formed by stemping. The two plate bodies are butt-joined to each other and then welded to form a sealed cavity. However, the groove is made through a stamping process, causing a stamped chamfer to be formed at an opening of the groove, and leading to a gap formed in the cavity. After the two plate bodies are connected through brazing, the gap cannot be effectively filled in with a brazing seam, resulting in a decrease in pressure-bearing performance of the cavity.

### SUMMARY

An object of the present disclosure is to at least solve a problem in the related art that a gap in the cavity of a pipeline integration module cannot be effectively filled. The object is achieved by technical solutions as follows.

According to embodiments of the present disclosure, there is provided a pipeline integration module. The pipeline integration module includes a first plate-like component, a second plate-like component, and a sandwich layer. The first plate-like component has a first groove. The first groove has a first stamped chamfer at an end portion of an opening of the first groove. The second plate-like component has a second groove. The second groove has a second stamped chamfer at end portion of an opening of the second groove. The first plate-like component and the second plate-like component cover each other, and the second groove and the first groove correspond to each other and together enclose a cavity. The cavity has a gap between the first stamped chamfer and the second stamped chamfer. The sandwich layer is disposed between the first plate-like component and the second plate-like component and connected to the first plate-like component and the second plate-like component. The sandwich layer has an end portion facing towards the cavity, and the end portion is located within the gap.

According to the pipeline integration module of the present disclosure, the sandwich layer is added between the first plate-like component and the second plate-like component. The sandwich layer is partially located within the gap and can form the filling of the gap. In addition, the connection between the sandwich layer and the first plate-like component as well as the connection between the sandwich layer and the second plate-like component can also form the filling of the gap. Therefore, the filling of the gap between the first stamped chamfer and the second stamped chamfer can be improved.

In addition, the pipeline integration module according to the present disclosure can also have additional technical features as follows.

In some embodiments of the present disclosure, the sandwich layer has an extension length L in the gap; and a first convex arc of the first stamped chamfer has a radius R. L is 0.2 to 1.2 times of R.

In some embodiments of the present disclosure, the sandwich layer has a thickness ranging from 0.2 mm to 1 mm.

In some embodiments of the present disclosure, the sandwich layer is connected to both the first plate-like component and the second plate-like component through a brazing material layer.

In some embodiments of the present disclosure, a first brazing material layer is provided on a surface of the sandwich layer facing towards the first plate-like component; and a second brazing material layer is provided on a surface of the sandwich layer facing towards the second plate-like component.

In some embodiments of the present disclosure, the first brazing material layer is made of a foil-like brazing material or a paste-like brazing material; and/or the second brazing material layer is made of a foil-like brazing material or a paste-like brazing material.

In some embodiments of the present disclosure, the brazing material layer has a thickness ranging from 0.03 mm to 0.15 mm.

In some embodiments of the present disclosure, at least two cavities are provided in the pipeline integration moduel; and the number of the sandwich layer in consistent with the number of the cavity. The sandwich layer and the cavity are in one-to-one correspondence.

In some embodiments of the present disclosure, two adjacent sandwich layers are arranged side by side, and a spacing between the two adjacent sandwich layers is greater than 2 mm.

In some embodiments of the present disclosure, the first plate-like component includes a first body portion, wherein the first body portion is in a shape of a flat plate and connected to the first groove, wherein the first body portion has a first through hole; and/or the second plate-like component includes a second body portion, wherein the second body portion is in the shape of the flat plate and connected to the second groove, wherein the second body portion has a second through hole.

According to embodiments of the present disclosure, there is provided an air conditioner outdoor unit. The air conditioner outdoor unit includes the pipeline integration module described in the above embodiments.

According to the air conditioner outdoor unit of the present disclosure, changes are made to the structure of the pipeline integration module. The sandwich layer is added between the first plate-like component and the second plate-like component. The sandwich layer is partially located within the gap and can form the filling of the gap. In addition, the connection between the sandwich layer and the first plate-like component as well as the connection between the sandwich layer and the second plate-like component can also form the filling of the gap. Therefore, the filling of the gap between the first stamped chamfer and the second stamped chamfer can be improved.

According to embodiments of the present disclosure, there is provided a method for preparing a pipeline integration module. The method includes:

preparing a first plate-like component having a first groove and a second plate-like component having a second groove; processing a sandwich layer having an avoidance opening, the avoidance opening and a cavity enclosed by the first groove and the second groove being consistent in shape; and disposing the sandwich layer between the first plate-like component and the second plate-like component, and connecting the sandwich layer to the first plate-like component and the second plate-like component.

In some embodiments of the present disclosure, the sandwich layer is connected to the first plate-like component through brazing; and/or the sandwich layer is connected to the second plate-like component through brazing.

### BRIEF DESCRIPTION OF THE DRAWINGS

Various other advantages and benefits will become apparent to those skilled in the art after reading the detailed description of preferred embodiments given below. The drawings are used for a purpose of illustrating the preferred embodiments only, rather than limiting the present disclosure. Moreover, throughout the drawings, same elements are denoted by same reference numerals.
FIG. 1 schematically shows a perspective structural view of a pipeline integration module according to an embodiment of the present disclosure.
FIG. 2 is a schematically perspective structural view of the pipeline integration module shown in FIG. 1 at a second viewing angle.
FIG. 3 schematically shows a structural view of a sandwich layer of a pipeline integration module according to an embodiment of the present disclosure.
FIG. 4 is a schematic structural view of the first plate-like component shown in FIG. 1.
FIG. 5 is a schematic structural view of the second plate-like component shown in FIG. 1.
FIG. 6 is a schematically cross-sectional structural view of the pipeline integration module after welding.
FIG. 7 is a partially enlarged view of part A in FIG. 6.
FIG. 8 is a partially enlarged view of part B in FIG. 6.

Reference numerals as follows:
100 pipeline integration module;
10 first plate-like component; 11 first groove; 12 first body portion; 121 first through hole; 13 first stamped chamfer; 131 first convex arc; 14 air inlet; 15 first convex bump; 16 oil return port;
20 second plate-like component; 21 second groove; 22 second body portion; 221 second through hole; 23 second stamped chamfer; 231 second convex arc; 24 flow guide portion; 25 second convex bump; 251 air outlet;
30 sandwich layer; 31 avoidance opening; 311 stamped opening;
40 cavity;
50 gap;
60 first brazing seam; and
70 second brazing seam.

### DETAILED DESCRIPTION OF THE EMBODIMENTS

Exemplary embodiments of the present disclosure will be described in detail below with reference to the drawings. Although the exemplary embodiments of the present disclosure are illustrated in the drawings, it should be understood that the present disclosure may be embodied in various forms and should not be construed as limited to the embodiments described herein. Instead, these embodiments are provided for a thorough understanding of the present disclosure, and can fully convey the scope of the present disclosure to those skilled in the art.

It should be understood that terms used herein are intended to describe particular exemplary embodiments only and are not intended to be limited thereto. Unless the context clearly indicates, otherwise singular forms of "a", "one" and "said" as used herein can also be interpreted as including plural forms. Terms "include", "contain" and "have" are inclusive and therefore specify the presence of stated features, elements, and/or components, but do not preclude the presence or an addition of one or more other features, elements, components, and/or a combination thereof. The method steps, processes, and operations described herein are not to be construed as necessitating that they be performed in a particular order described or illustrated, unless the order of performance is clearly indicated. It should also be understood that additional or alternative steps may be used.

Although terms "first", "second", "third", etc. may be used herein to describe multiple elements, components, regions, layers and/or sections, these elements, components, regions, layers and/or sections should not be limited by these terms. These terms may only be used to distinguish one element, component, region, layer or section from another region, layer or section. The terms such as "first", "second" or the like do not imply a sequence or an order when used herein, unless specified otherwise. Therefore, a first element, component, region, layer or section discussed below may be represented as a second element, component, region, layer or section, without departing from the teachings of exemplary implementations.

For ease of description, spatially relative terms, such as "internal," "external," "inside," "outside," "beneath," "below," "on," and "below," may be used herein to describe a relation of one element or feature illustrated in the figures to another element or feature illustrated in the figures. These spatially relative terms are intended to include different orientations of devices in use or operation other than those depicted in the figures. For example, if a device in the figure is flipped over, an element described as "under other elements or features" or "below other elements or features" will then be oriented as "on other elements or features" or "above other elements or features". Thus, the example term "below ..." may include orientations of above and below. The device may be oriented differently (e.g., rotated 90 degrees or in other directions), and may be interpreted in accordance with spatially relative descriptors used herein.

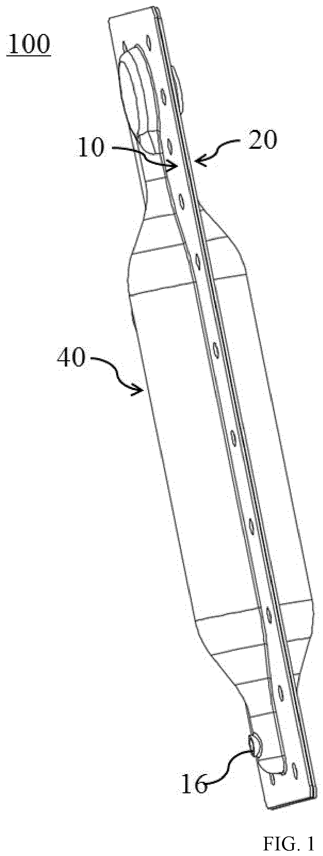

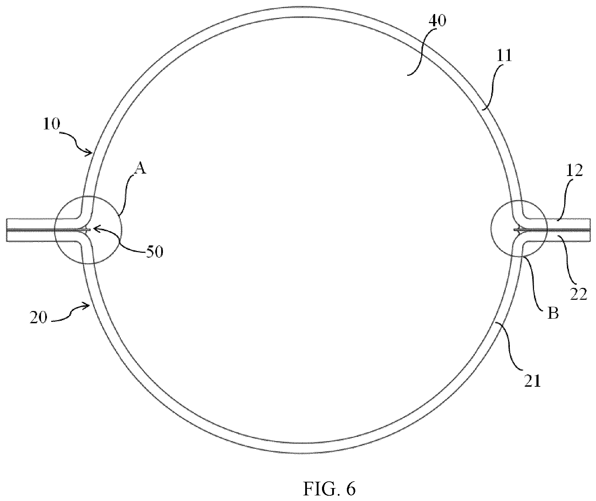

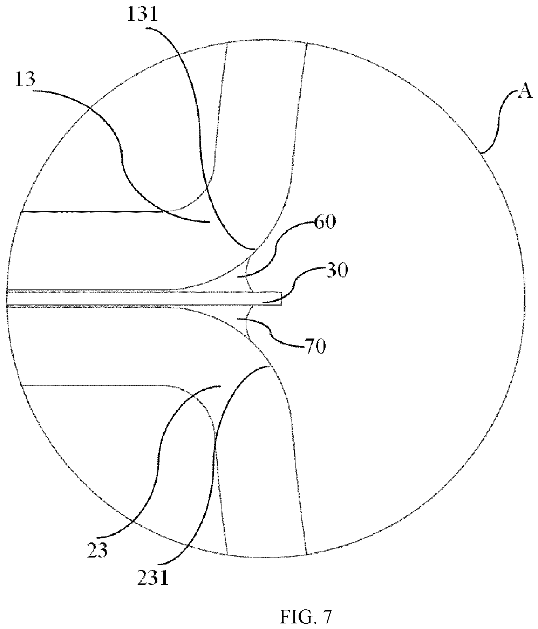

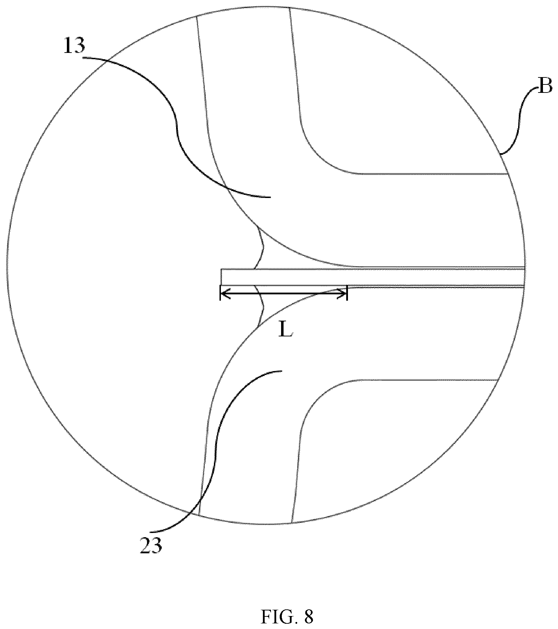

As illustrated in FIGS. 1 to 8, according to embodiments of the present disclosure, there is provided a pipeline integration module 100. As illustrated in FIGS. 6, 7, and 8, FIG. 6 is a schematic cross-sectional view of a pipeline integration module 100 after welding; FIG. 7 is a partially enlarged view of part A in FIG. 6; and FIG. 8 is a partially enlarged view of part B in FIG. 6. The pipeline integration module 100 includes a first plate-like component 10 and a second plate-like component 20. The first plate-like component 10 has a first groove 11 in a thickness direction of the first plate-like component 10. The first groove 11 has a first stamped chamfer 13 at an end portion of an opening of the first groove 11. Because the first groove 11 is made through a stamping process, the stamped chamfer inevitably appears at the end portion of the opening of the first groove 11. The stamped chamfer at the end portion of the opening of the first groove 11 is referred to as the first stamped chamfer 13 herein.

Similarly, the second plate-like component 20 has a second groove 21 in a thickness direction of the second plate-like component 20. The second groove 21 has a second stamped chamfer 23 at an end portion of an opening of the second plate-like component 20. Because the second groove 21 is made through a stamping process, the stamped chamfer inevitably appears at the end portion of the opening of the second plate-like component 20. The stamped chamfer of the end portion of the opening of the second plate-like component 20 is referred to as the second stamped chamfer 23 herein.

The first plate-like component 10 and the second plate-like component 20 cover each other, and the second groove 21 and the first groove 11 correspond to each other and together enclose a cavity 40. The cavity 40 has a gap 50 between the first stamped chamfer 13 and the second stamped chamfer 23.

In the related art, for the pipeline integration module 100, two plate bodies also cover each other to define a cavity 40. The cavity 40 has a gap 50, the existence of which reduces high-pressure resistance of the cavity 40.

The "covering" herein is usually achieved by welding the two plate bodies. Specifically, a brazing material sheet is placed between the two plate bodies, and the two plate bodies are connected to each other through brazing. After the two stamped plate bodies are spliced, the gap 50 is defined between the first stamped chamfer 13 and the second stamped chamfer 23, resulting in a sharp change in a shape of the defined cavity 40. The gap 50 cannot be completely filled when using a furnace brazing process. When the cavity 40 is subjected to a large static load or an alternating load, a formed brazing seam often tears in the gap 50 in a thickness direction of the brazing seam. Performance of the cavity 40 in bearing the static load and the alternating loads is better with a filling degree of the gap 50.

In addition, since the two plate bodies in the related art are made through stamping, it is easy to cause unsatisfactory flatness of the two plate bodies. If the two plate bodies simultaneously have defects such as wrinkles, bulges, and unsatisfactory flatness at same positions of the two plate bodies, superposition of the gap 50 occurs when the two plate bodies cover each other, which is disadvantageous to forming of the brazing seam and results in low strength of the brazing seam.

In the present disclosure, the pipeline integration module 100 further includes a sandwich layer 30 disposed between the first plate-like component 10 and the second plate-like component 20. The sandwich layer 30 is connected to the first plate-like component 10 and the second plate-like component 20. The sandwich layer 30 has an end portion close to the cavity 40, and the end portion is located within the gap 50. That is, the sandwich layer 30 is partially located within the gap 50.

It should be noted that the end portion of the sandwich layer 30 close to the cavity 40 mentioned herein refers to an inner end portion of the sandwich layer 30, which is a concept relative to an outer end portion of the sandwich layer 30. The outer end portion of the sandwich layer 30 is an end portion facing away from the cavity 40, and the inner end portion of the sandwich layer 30 is an end portion located within the cavity 40.

In the pipeline integration module 100 according to the present disclosure, an improvement is made to the pipeline integration module 100 in the related art. The sandwich layer 30 is added between the first plate-like component 10 and the second plate-like component 20. The sandwich layer 30 is partially located within the gap 50 and can for the filling of the gap 50. In addition, the connection between the sandwich layer 30 and the first plate-like component 10 as well as the connection between the sandwich layer 30 and the second plate-like component 20 can also form the filling of the gap 50. Therefore, the filling of the gap 50 between the first stamped chamfer 13 and the second stamped chamfer 23 can be improved. Filling volume of the gap 50 can be increased by at least one time compared with the solution in the related art while significantly increasing a thickness of the brazing seam. In this way, a stress concentration level of the cavity 40 after being loaded is effectively reduced. As a result, the anti-pressure performance and anti-fatigue performance of the cavity 40 formed by splicing two plate bodies made of two stamped sheet metal members are improved.

In addition, since the sandwich layer 30 in the present disclosure may be machined or processed in other ways, flatness is uniform and surface roughness is low. Disposing the sandwich layer 30 between the first plate-like component 10 and the second plate-like component 20 can reduce a spacing between the first plate-like component 10 and the sandwich layer 30 as well as a spacing between the second plate-like component 20 and the sandwich layer 30. After the welding, the superposition of the gap 50 caused by the deformation of the first plate-like component 10 and the deformation of the second plate-like component 20 is avoided to better facilitate spreading and the forming of the brazing seam.

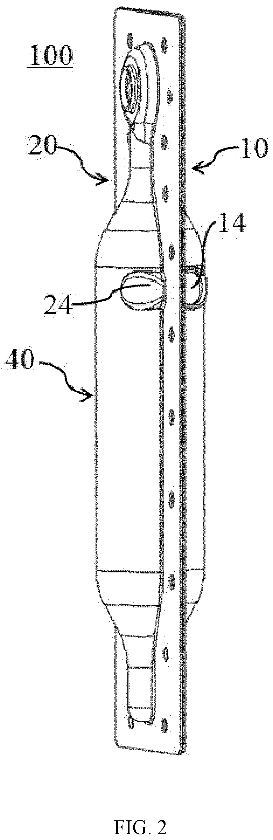

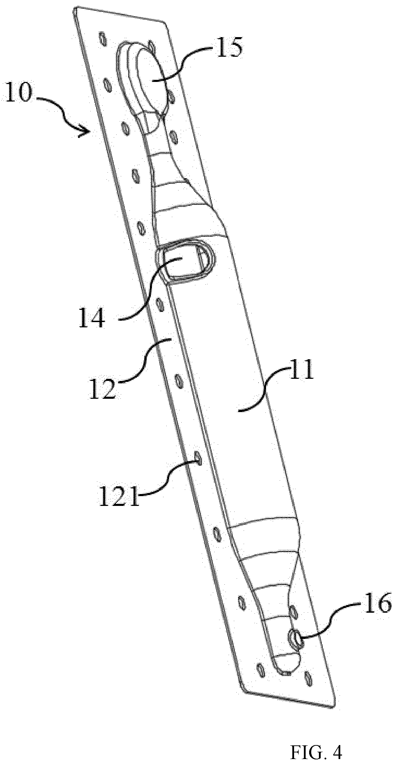

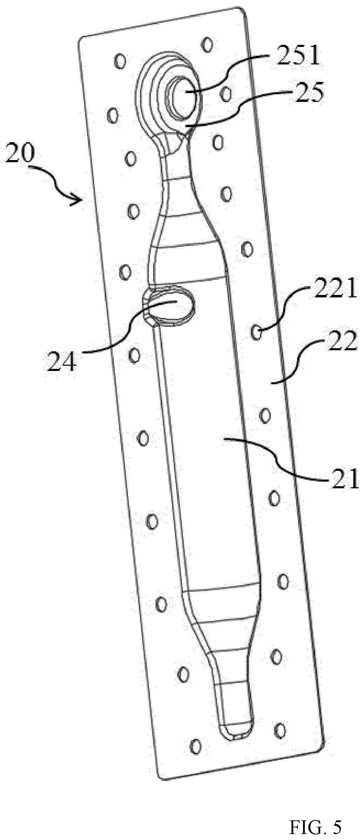

In some embodiments, as illustrated in FIGS. 1 and 2, and FIGS. 4 and 5, FIG. 1 schematically shows a perspective structural view of a pipeline integration module 100 according to an embodiment of the present disclosure; FIG. 2 is a schematically perspective structural view of the pipeline integration module 100 shown in FIG. 1 at a second viewing angle; FIG. 4 is a schematic structural view of the first plate-like component 10 shown in FIG. 1; and FIG. 5 is a schematic structural view of the second plate-like component 20 shown in FIG. 1. In addition to the first groove 11, the first plate-like component 10 further includes a first body portion 12. The first body portion 12 is in a shape of a flat plate and connected to the first groove 11. The first body portion 12 has a first through hole 121. In addition to the second groove 21, the second plate-like component 20 further includes a second body portion 22. The second body portion 22 is in the shape of the flat plate and connected to the second groove 21. The second body portion 22 has a second through hole 221.

By the first body portion 12 and the second body portion 22 corresponding to each other and being connected to each other, the first groove 11 and the second groove 21 can together enclose the cavity 40, and the cavity 40 is defined as a pipe for liquid flowing.

It should be particularly noted that the first through hole 121 and the second through hole 221 correspond to each other, and the first body portion 12 includes a plurality of first through holes 121 and the second body portion 22 includes a plurality of second through holes 221. Repair welding may be made to the brazing seam through the first through hole 121 and/or the second through hole 221 to facilitate subsequent repair and maintenance of the pipeline integration module 100. For example, when a fluid leak occurs, repair welding may be made, based on a fluid leaking position, to the brazing seam through the first through hole 121 and/or the second through hole 221 close to the leaking position.

In some embodiments, the sandwich layer 30 has an extension length L. L is 0.2 to 1.2 times of a radius R of a first convex arc 131 of the first stamped chamfer 13. That is, L is 0.2 to 1.2 times of R, such as 0.4, 0.6, 0.7 or 0.8 times. The extension length herein is a length corresponding to length L marked in FIG. 8, which refers to a length of the sandwich layer 30 exposed in the gap 50 in FIG. 8. If the extension length L of the sandwich layer 30 in the gap 50 is too small, the brazing seam after the welding may cover an end portion of the sandwich layer 30 in the gap 50, resulting in an unsatisfactory filling effect on the gap 50. However, if the extension length L of the sandwich layer 30 in the gap 50 is too long, an application function of the cavity 40 may be affected due to the excessively long extension length L, for example, a reduction in an oil separation effect.

It should be noted that the extension length L of the sandwich layer 30 in the gap 50 is same at different positions, and the effect of filling the gap 50 is also uniform and consistent, with no occurrence of a high local filling degree and a low local filling degree.

It should be noted that the first convex arc 131 herein refers to a surface of the first stamped chamfer 13 facing towards an interior of the cavity 40, and the second convex arc 231 refers to a surface of the second stamped chamfer 23 facing towards the interior of the cavity 40. The first convex arc 131 and the second convex arc 231 are symmetrical and correspond to each other. If there is no gap 50 between the first stamped chamfer 13 and the second stamped chamfer 23, a cross section of the cavity 40 enclosed by the first groove 11 and the second groove 21 is in a shape of a regular circle. However, due to the existence of the gap 50, the cross section of the cavity 40 enclosed by the first groove 11 and the second groove 21 is in a shape of an irregular circle. Therefore, a part of the gap 50 the corresponding non-circular part needs to be filled to allow the cross section of the cavity 40 to be closer to a circle. Thus, the anti-pressure performance and the anti-fatigue performance of the cavity 40 are improved.

In some embodiments, the sandwich layer 30 has a thickness ranging from 0.2 mm to 1 mm. If the thickness is too small, a processing and assembling process of the sandwich layer 30 may be difficult. However, if the thickness of the sandwich layer 30 is too large, a cross-sectional area of the cavity 40 may be significantly increased. In this case, the stress level of the cavity 40 is raised, which is disadvantageous to an improvement of the pressure-bearing performance and the anti-fatigue performance of the cavity 40. Therefore, the thickness of the sandwich layer 30 herein may be one of 0.3 mm, 0.4 mm, or 0.5 mm, and other parameters ranging from 0.2 mm to 1 mm may also be selected in other embodiments of the present disclosure.

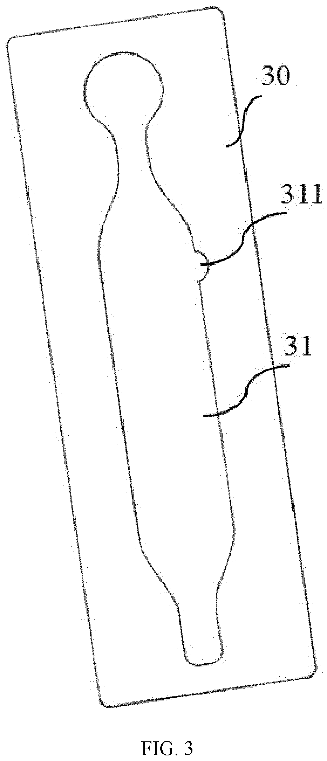

In some embodiments, as illustrated in FIG. 3, FIG. 3 schematically shows a structural view of the sandwich layer 30 of a pipeline integration module 100 according to an embodiment of the present disclosure. The sandwich layer 30 is of a plate-like structure as a whole and has an avoidance opening 31. The avoidance opening 31 corresponds to the cavity 40, and therefore the sandwich layer 30 does not affect the flowing of the fluid inside the cavity 40. The inner end portion of the sandwich layer 30 refers to an edge part of the avoidance opening 31. In FIG. 3, the outer end portion of the sandwich layer 30 is enclosed into a rectangular shape, and the inner end portion of the sandwich layer 30 is enclosed into a shape consistent with the shape of the cavity 40.

In some embodiments, the sandwich layer 30 is connected to both the first plate-like component 10 and the second plate-like component 20 through a brazing material layer. In one embodiment of the present disclosure, the sandwich layer 30 is connected to the first body portion 12 through a brazing material layer, and the sandwich layer 30 is connected to the second body portion 22 through a brazing material layer, which can form the filling of the gap 50.

The brazing material layer herein may be disposed on a surface of the first plate-like component 10 facing towards the sandwich layer 30, and may also be disposed on a surface of the second plate-like component 20 facing towards the sandwich layer 30. In other embodiments of the present disclosure, the brazing material layer may also be disposed on a surface of the sandwich layer 30 facing towards the first plate-like component 10 and/or a surface facing towards the second plate-like component 20. There are many optional configurations, which are not exhaustively listed herein.

As one of frequently selected ways, a first brazing material layer (not shown) is provided on a surface of the sandwich layer 30 facing towards the first plate-like component 10, and the surface of the sandwich layer 30 facing towards the first plate-like component 10 is an upper surface; and a second brazing material layer (not shown) is provided on a surface of the sandwich layer 30 facing towards the second plate-like component 20, and the surface of the sandwich layer 30 facing towards the second plate-like component 20 is a lower surface. By disposing the first brazing material layer and the second brazing material layer on the upper surface and the lower surface of the sandwich layer 30, respectively, the connection between the sandwich layer 30 and the first plate-like component 10 can be achieved through the first brazing material layer, and the filling of the gap 50 can be achieved from the upper side of the sandwich layer 30 through the brazing seam formed by the first brazing material layer; the connection between the sandwich layer 30 and the second plate-like component 20 can also be achieved through the second brazing material layer, and the filling of the gap 50 can be achieved from the lower side of the sandwich layer 30 through the brazing seam formed by the second brazing material layer.

The specific arrangements of the first brazing material layer and the second brazing material layer will be described below.

In another exemplary embodiment of the present disclosure, the first brazing material layer may be solid or paste-like. For example, the first brazing material layer is made of a foil-like brazing material or a paste-like brazing material. Similarly, the second brazing material layer may also be a foil-like brazing material or a paste-like brazing material. When a foil-like brazing material is selected for the first brazing material layer and/or the second brazing material layer, the first brazing material layer and/or the second brazing material layer may be fixed to the surface of the sandwich layer 30 through resistance spot welding. If a paste-like brazing material is selected for both the first brazing material layer and the second brazing material layer, the paste-like brazing material may be coated on the two surfaces of the sandwich layer 30. The two surfaces are the surface of the sandwich layer 30 facing towards the first plate-like component 10 and the surface facing towards the second plate-like component 20.

In some embodiments, the foil-like brazing material has a thickness ranging from 0.03 mm to 0.15 mm, and specifically 0.04 mm, 0.05 or 0.08 mm, etc., and may be pre-applied to the upper surface and/or the lower surface of the sandwich layer 30. It should be noted herein that a foil-like brazing material may be simultaneously provided on the upper surface and the lower surface of the sandwich layer 30; a paste-like brazing material may be simultaneously provided on the upper surface and the lower surface of the sandwich layer 30; or a foil-like brazing material may be provided on the upper surface of the sandwich layer 30, and a paste-like brazing material may be provided on the lower surface of the sandwich layer 30; or an opposite arrangement may be adopted, that is, a foil-like brazing material may be provided on the lower surface of the sandwich layer 30, and a paste-like brazing material may be provided on the upper surface of the sandwich layer 30, which may be selected based on convenience.

With continued reference to FIG. 7, the first brazing layer after completing the welding is formed as a first brazing seam 60, and the second brazing layer after completing the welding is formed as a second brazing seam 70. The first brazing seam 60 formed by the first brazing layer under a capillary action can for the filling of the gap 50, and the second brazing seam 70 formed by the second brazing layer under the capillary action can also for the filling of the gap 50. In addition, the gap 50 is filled by the sandwich layer 30. These three, i.e., the first brazing seam 60, the second brazing seam 70, and the sandwich layer 30, together form the filling of the gap 50, which significantly improves the effect of filling the gap 50. In this way, the filling volume is improved more than doubled than the filling volume in the technical solution in the related art.

In addition, the positions in which the first through holes 121 and the second through holes 221 are arranged and the technical effects they produce are supplemented herein. It can be seen from FIG. 5 that the second through holes 221 is equally arranged at intervals and extend outwardly along an edge of the cavity 40. The "outwardly" herein refers to a direction away from the cavity 40. Moreover, the plurality of second through holes 221 is evenly arranged at intervals. When repair welding is required, the repair welding may be made to a leaking position by filling a position where the second brazing seam 70 is located with a brazing material through the plurality of second through holes 221 close to the leaking position.

Similarly, the first through holes 121 are equally arranged at intervals and extend outwardly along the edge of the cavity 40. The "outwardly" herein refers to the direction away from the cavity 40. Moreover, the plurality of first through holes 121 is evenly arranged at intervals and corresponds to the plurality of second through holes 221. When repair welding is required, repair welding may be made to a leaking position by filling a position where the second brazing seam 70 is located with a brazing material through the plurality of first through holes 121 close to the leaking position.

In some embodiments, at least two first grooves 11 are provided, and the at least two first grooves 11 are spaced apart from each other or arranged at intervals. At least two sandwich layers 30 are provided, and the at least two sandwich layers 30 are are spaced apart from each other or arranged at intervals. The at least two sandwich layers 30 and the at least two first grooves 11 are in one-to-one correspondence to form at least two cavities 40. This is also an important innovation of the present disclosure. This embodiment will be described in detail below.

In the previous embodiments, one first groove 11 and one second groove 21 are provided, and one cavity 40 is enclosed by the first groove 11 and the second groove 21. While in this embodiment, at least two first grooves 11 are provided, and the second grooves 21 is consistent with the first grooves 11 in quantity. That is, at least two cavities 40 are integrated at the pipeline integration module 100. For the two cavities 40, two sandwich layers 30 are provided independently instead of being provided as an integrated sandwich layer 30. On the one hand, the independent sandwich layer 30 facilitates the forming of the brazing seam. On the other hand, an one-time leakage detection is conveniently performed on the at least two cavities 40, eliminating a need to check the at least two cavities 40 one by one. In this way, detection efficiency is improved.

Accordingly, in order to avoid a communication between the two cavities 40, a spacing between two adjacent sandwich layers 30 is greater than 2 mm. If the distance is too small, for example, a spacing between the two adjacent sandwich layers 30 is 1 mm, which will cause brazing seams between the two adjacent sandwich layers 30 to be connected to each other during the brazing. If there is internal leakage between the two adjacent cavities 40, the cavity 40 that is leaking cannot be detected by the one-time leakage detection.

The spacing between the two adjacent sandwich layers 30 needs to be smaller than a predetermined size, which may be determined based on a spacing between the two cavities 40. The spacing herein may be determined based on a closest distance between the two first grooves 11. For example, when a spacing between the two cavities 40 is 10 mm, the spacing between the two sandwich layers 30 needs to be smaller than 10 mm. A suitable spacing may be selected from 2 mm to 10 mm, such as 4 mm or 5 mm.

The case where two cavities 40 are provided is described above, when a plurality of cavities 40 is provided, for example, three or four cavities 40, three or four sandwich layers 30 are also provided correspondingly. Each sandwich layer 30 corresponds to one cavity 40. Therefore, the gap 50 of each cavity 40 is filled separately.

In some embodiments, as illustrated in FIG. 2, when the cavity 40 is used in an oil separation scenario, the first groove 11 has an air inlet 14 connected to an air inflowing pipe, and the air inlet 14 is configured to allow gas to be transported to the interior of the cavity 40 through the air inlet 14. In addition, a first convex bump 15 is formed at an end of the first groove 11, and the first convex bump 15 is configured to change a flowing direction of fluid. An oil return port 16 is formed at another end of the first groove 11, and the oil return port 16 is configured to be connected to an oil return pipe to allow waste oil after oil separation to be transferred. Correspondingly, as illustrated in FIG. 5, the second groove 21 is provided with a second convex bump 25 corresponding to the first convex bump 15. The second convex bump 25 has an air outflowing hole 251 configured to be connected to an air outflowing pipe. Each of the first convex bump 15 and the second convex bump 25 herein has a circular structure, and may also have a square structure or a structure in other shapes.

In some embodiments, a flow guide portion 24 is also provided at a part of the second groove 21 corresponding to the air inlet 14. The flow guide portion 24 is made through stamping. The flow guide portion 24 is configured to guide gas introduced from the air inlet 14, to allow the gas to be smoothly introduced into the interior of the cavity 40. Accordingly, in order to avoid an influence of the sandwich layer 30 on the gas, the sandwich layer 30 further has a stamped opening 311 formed as a part of the avoidance opening 31.

In addition, each of the first plate-like component 10 and the second plate-like component 20 is made of stainless steel. Compared with copper alloy, the stainless steel material has lower cost and better stamping performance, which can reduce cost of the air conditioner outdoor unit. In addition, the stainless steel material is also selected for the sandwich layer 30, which is same as a material of each of the first plate-like component 10 and the second plate-like component 20, such as 308 stainless steel or 2209 stainless steel.

It should be noted that each of the first plate-like component 10, the second plate-like component 20, and the sandwich layer 30 has a same outer dimension, with the overall outer contour in a rectangular shape. In other embodiments of the present disclosure, a shape and a dimension of the brazing material layer are consistent with the shape and the dimension of the sandwich layer 30.

According to embodiments of the present disclosure, there is provided an air conditioner outdoor unit. The air conditioner outdoor unit includes the pipeline integration module 100 mentioned in the above embodiments. The air conditioner outdoor unit herein includes the pipeline integration module 100 mentioned in the above embodiments and a connection pipe, and the connection pipe is connected to the pipeline integration module 100. The connection pipe is connected to the pipeline integration module 100 at the connection hole.

The connection pipe herein includes an air inflowing pipe, an air exhaust pipe, an oil outflowing pipe, etc. The connection hole herein includes an air inlet 14, an oil return port 16, an air outflowing hole 251, etc. A connection opening may be defined in the cavity 40 based on a corresponding functional member, and connected to a corresponding connection pipe. For example, when the functional member is a filter assembly, a connection pipe with a filter function is provided. For other cases, no examples are given herein.

In addition to these structures, the air conditioner outdoor unit also includes a compressor, a low-pressure tank, an electronic expansion valve, an outdoor heat exchanger, etc. These are common components in the related art and are not elaborated herein.

According to embodiments of the present disclosure, there is also provided a method for preparing a pipeline integration module 100. The pipeline integration module 100 is the pipeline integration module 100 mentioned in the above embodiments. The method includes operations as follows.

A first plate-like component 10 having a first groove 11 is obtained through stamping, and a second plate-like component 20 having a second groove 21 is processed.

In an exemplary embodiment of the present disclosure, a first groove 11 may be formed on a flat plate through stamping, and a second groove 21 may be formed on another flat plate through the stamping. A cross-section of each of the first groove 11 and the second groove 21 is semicircular. As a result, the first groove 11 and the second groove 21 form a cross-section that is approximately circular.

A sandwich layer 30 having an avoidance opening 31 is processed. The avoidance opening 31 and a cavity enclsoed by the first groove and the second groove are consistent in shape.

The sandwich layer 30 herein may be a rectangular plate, and the avoidance opening 31 may be processed through wire cutting to prepare for a next step.

The sandwich layer 30 is disposed between the first plate-like component 10 and the second plate-like component 20, and connected to the first plate-like component 10 and the second plate-like component 20.

Before placing the sandwich layer 30 between the first plate-like component 10 and the second plate-like component 20, it is necessary to form a first brazing material layer on the upper surface of the sandwich layer 30 and a second brazing material layer on the lower surface of the sandwich layer 30. The first brazing material layer and/or the second brazing material layer may be paste-like or foil-like. When the first brazing material layer and/or the second brazing material layer are/is a foil-like brazing material, the first brazing material layer and/or the second brazing material layer are/is fixed to the upper surface and the lower surface of the sandwich layer 30 through resistance spot welding.

The connection herein is mainly welding, and the first plate-like component 10 and the second plate-like component 20 are connected to the sandwich layer 30 through brazing.

In some embodiments, the sandwich layer 30 is connected to the first plate-like component 10 through brazing, and/or the sandwich layer 30 is also connected to the second plate-like component 20 through brazing.

The brazing is achieved through furnace brazing, and a plurality of pipeline integration modules 100 may be welded at one time to achieve small batch production. The brazing process may be vacuum brazing to avoid an influence of air on strength of the brazing.

It should be noted that it is necessary to ensure that an extension length L of the sandwich layer 30 in the gap meets specified requirements during a mounting, that is, the sandwich layer 30 has an extension length L 0.2 to 1.2 times a radius R of a first convex arc 131 of the first stamped chamfer 13. For example, an extension length L here may be 2 mm.

In common dimensions, the first plate-like component 10 has a thickness of 1.2 mm same as a thickness of the second plate-like component 20; the foil-like brazing material has a thickness of 0.05 mm; and the extension length L is 2 mm. After the test is completed, the resistance spot welding is used as the fixing method during the mounting. Placing the assembled sample in a vacuum brazing furnace can achieve an effect of almost completely filling the gap 50. In this way, the pressure-bearing performance and the anti-fatigue performance of the cavity 40 are improved.

While the specific embodiments of the present disclosure have been described above, the protection scope of the present disclosure is not limited to these embodiments. Various variants and alternatives can be easily conceived by any of those skilled in the art without departing from the technical scope of the present disclosure. Therefore, these variants and alternatives are to be encompassed by the protection scope of present disclosure as defined by the claims as attached.

## Claims

1. A pipeline integration module, comprising:
a first plate-like component having a first groove, the first groove having a first stamped chamfer at an opening of the first groove;
a second plate-like component having a second groove, the second groove having a second stamped chamfer at an opening of the second groove, the first plate-like component and the second plate-like component covering each other, the second groove and the first groove corresponding to each other and together enclosing a cavity, the cavity having a gap between the first stamped chamfer and the second stamped chamfer; and
a sandwich layer disposed between the first plate-like component and the second plate-like component and connected to the first plate-like component and the second plate-like component, the sandwich layer having an end portion facing towards the cavity, the end portion located within the gap.

2. The pipeline integration module according to claim 1, wherein:
the sandwich layer has an extension length L in the gap; and
a first convex arc of the first stamped chamfer has a radius R, L being 0.2 to 1.2 times of R.

3. The pipeline integration module according to claim 1, wherein the sandwich layer has a thickness ranging from 0.2 mm to 1 mm.

4. The pipeline integration module according to claim 1, wherein the sandwich layer is connected to both the first plate-like component and the second plate-like component through a brazing material layer.

5. The pipeline integration module according to claim 1, wherein:
a first brazing material layer is provided on a surface of the sandwich layer facing towards the first plate-like component; and
a second brazing material layer is provided on a surface of the sandwich layer facing towards the second plate-like component.

6. The pipeline integration module according to claim 5, wherein:
the first brazing material layer is made of a foil-like brazing material or a paste-like brazing material; and/or
the second brazing material layer is made of a foil-like brazing material or a paste-like brazing material.

7. The pipeline integration module according to claim 4, wherein the brazing material layer has a thickness ranging from 0.03 mm to 0.15 mm.

8. The pipeline integration module according to claim 1, wherein:
at least two cavities are provided in the pipeline integration module; and
the sandwich layer is in consistent with the cavity in quantity, the sandwich layer and the cavity being in one-to-one correspondence.

9. The pipeline integration module according to claim 8, wherein two adjacent sandwich layers are arranged side by side, and a spacing between the two adjacent sandwich layers is greater than 2 mm.

10. The pipeline integration module according to claim 1, wherein:
the first plate-like component comprises a first body portion, wherein the first body portion is in a shape of a flat plate and connected to the first groove, the first body portion having a first through hole; and/or
the second plate-like component comprises a second body portion, wherein the second body portion is in the shape of the flat plate and connected to the second groove, the second body portion having a second through hole.

11. An air conditioner outdoor unit, comprising the pipeline integration module according to any one of claims 1 to 10.

12. A method for preparing the pipeline integration module according to any one of claims 1 to 10, the method comprising:
preparing a first plate-like component having a first groove and a second plate-like component having a second groove;
processing a sandwich layer having an avoidance opening, the avoidance opening and a cavity enclosed by the first groove and the second groove being consistent in shape; and
disposing the sandwich layer between the first plate-like component and the second plate-like component, and connecting the sandwich layer to the first plate-like component and the second plate-like component.

13. The method for preparing the pipeline integration module according to claim 12, wherein:
the sandwich layer is connected to the first plate-like component through brazing; and/or
the sandwich layer is connected to the second plate-like component through brazing.
